# EUROPÄISCHE PATENTSCHRIFT

(11) **EP 1 890 836 B1**
(45) Veröffentlichungstag und Bekanntmachung des Hinweises auf die Patenterteilung: **28.12.2011**
(21) Anmeldenummer: 06753981.7
(22) Anmeldetag: 30.05.2006
(51) Int. Cl.: B23K 26/06, B23K 26/42

(54) **LASERBEARBEITUNGSMASCHINE MIT EINER EINRICHTUNG ZUR ERFASSUNG VON VERÄNDERUNGEN DES LASERSTRAHLS**
LASER MACHINING DEVICE PROVIDED WITH A UNIT FOR DETECTING A LASER BEAM VARIATIONS
MACHINE D'USINAGE AU LASER COMPRENANT UN DISPOSITIF POUR DETECTER LES VARIATIONS DU FAISCEAU LASER

(30) Priorität: 31.05.2005 EP 05011662
(43) Veröffentlichungstag der Anmeldung: 27.02.2008
(73) Patentinhaber: Trumpf Laser- und Systemtechnik GmbH, 71254 Ditzingen (DE)
(72) Erfinder: WELLER, Roland, 70839 Gerlingen (DE); KAUPP, Peter, 71069 Sindelfingen (DE); LEHLEUTER, Franz, 70825 Korntal-Münchingen (DE)
(74) Vertreter: Kohler Schmid Möbus
(86) Internationale Anmeldenummer: PCT/EP2006/005147
(87) Internationale Veröffentlichungsnummer: WO 2006/128671

(56) Entgegenhaltungen:
- EP-A- 1 310 782
- EP-A- 1 398 612
- US-A- 5 676 866
- US-A1- 2001 045 418
- US-A1- 2002 008 091
- US-B2- 6 528 762

## Beschreibung

Die Erfindung betrifft eine Laserbearbeitungsmaschine gemäß Oberbegriff von Patentanspruch 1.

Eine derartige Laserbearbeitungsmaschine ist beispielsweise durch die US 2002/008091 A1 bekannt geworden.

Aufgrund thermischer Belastung oder Verschmutzung des Auskoppelspiegels während der Laserbearbeitung kann sich der Durchmesser des Laserstrahls ändern.

Bei der aus US 2002/008091 A1 bekannten Laserbearbeitungsmaschine ist eine Mikrospiegelanordnung zwischen dem Auskoppelspiegel des Lasers und einem das räumliche Laserstrahlprofil erfassenden Sensor angeordnet. Anhand des Sensorsignals werden über eine Steuerung die einzelnen Mikrospiegel zur Erzeugung eines gewünschten Laserstrahlprofils angesteuert.

Weiterhin ist aus der US 2001/045418 A1 eine Laserbearbeitungsmaschine bekannt, bei der ein adaptiver Spiegel innerhalb der Strahlführung angeordnet ist. Veränderungen des Auskoppelspiegels können dadurch nicht optimal kompensiert werden.

Durch die US 6528762 ist eine Vorrichtung zur Kontrolle der Position des Laserstrahls mithilfe eines Laserstrahlpositionssensors bekannt geworden.

Die EP1310782 zeigt eine Vorrichtung zur Erfassung des Zustandes eines optischen Elements und die Einbindung in einen Online-Mess- und Auswerte-Prozess.

Der Anmelder hat sich die Aufgabe gestellt, eine Veränderung des Durchmessers des Laserstrahls zwischen dem Auskoppelspiegel des Lasers und dem Bearbeitungskopf der Laserbearbeitungsmaschine besser zu kompensieren.

Diese Aufgabe wird durch eine Laserbearbeitungsmaschine mit den Merkmalen von Patentanspruch 1 gelöst.

Mithilfe der Erfindung können Ursachen für Änderungen von Laserstrahleigenschaften frühzeitig erkannt und durch Veränderung der adaptiven Spiegeleigenschaften korrigiert werden. Die Steuerung ist vorteilhafterweise zur Anpassung der Prozessparameter der Laserbearbeitung, wie Brennweite und Strahldurchmesser, und/oder zur Kompensation von Änderungen des Auskoppelspiegels ausgebildet. Da der adaptive Spiegel möglichst unmittelbar vor dem Auskoppelspiegel angeordnet ist, können große Durchmesserveränderungen des Laserstrahls erreicht werden.

Zwei Ausführungsbeispiele der Erfindung sind in der Zeichnung schematisch dargestellt und werden nachfolgend mit Bezug zu den Figuren der Zeichnung näher erläutert. Es zeigt:
- Figur 1: eine erste Laserbearbeitungsmaschine;
- Figur 2: eine zweite Laserbearbeitungsmaschine.

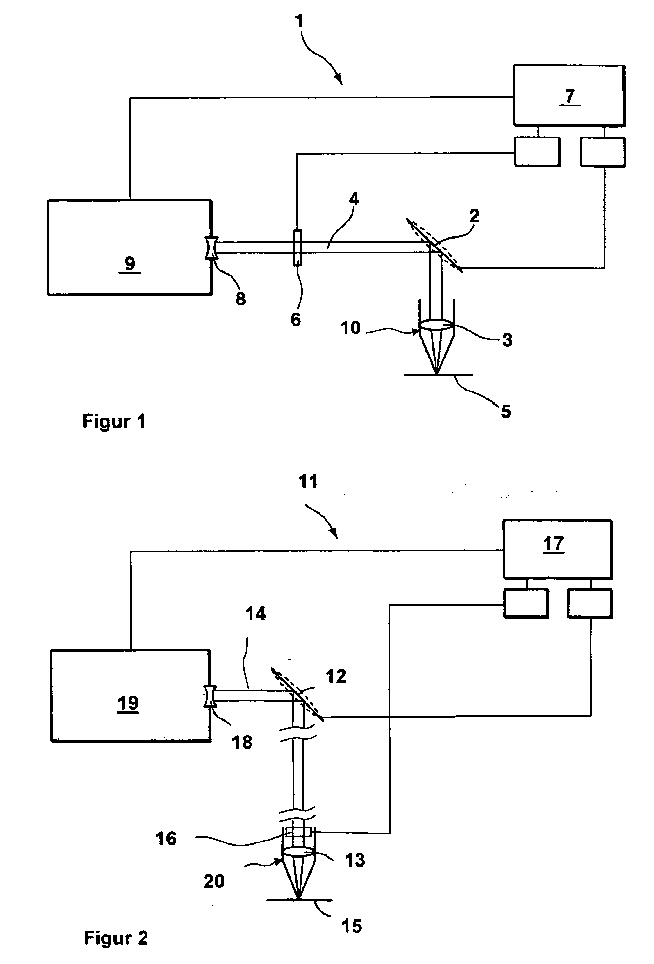

Aus der Figur 1 ist der Aufbau einer Laserbearbeitungsmaschine 1 ersichtlich, welche in der Strahlführung einen adaptiven Spiegel 2 mit sphärisch deformierbarer Spiegeloberfläche und im Laserbearbeitungskopf einen Fokussierspiegel **3** zur Fokussierung eines Laserstrahls **4** auf ein Werkstück **5** umfasst.

Durch eine In-Process-Messung des Laserstrahls 4 vor dem Laserbearbeitungskopf **10** können die Prozessparameter (beispielsweise die Rohstrahldurchmesseränderung) über den Spiegel 2 erfasst und angepasst werden bzw. die Veränderung eines Auskoppelspiegels **8** (Verschleiß, Alterung, Verunreinigung, etc.) des Lasers **9** kann kompensiert werden.

Ein Sensor oder Messgerät **6,** z. B. ein an sich bekannter und hier nicht näher beschriebener BeamScanner der Fa. Primes oder ein Laserscope UFC 80 der Fa. Prometec, wird direkt vor dem Bearbeitungskopf 10 in die Laserbearbeitungsmaschine 1 integriert. Mit den in-process ermittelten Daten wird der adaptive Spiegel 2, entsprechend vorgegebener Daten, verstellt. Der Spiegel 2 sollte so nahe wie möglich am Auskoppelspiegel 8 des Lasers 9 angebaut werden, um eine entsprechend große Durchmesseränderung bis zur Bearbeitungsstelle erreichen zu können. Eine Steuerung oder Regelung des Spiegels 2 kann durch eine Maschinensteuerung, einen PC oder manuell erfolgen. Im gezeigten Ausführungsbeispiel ist eine Steuereinheit 7 vorgesehen, welche Messwerte des Laserstrahls 4 erfasst und mit Sollwerten vergleicht. Die Sollwerte können über eine Maschinensteuerung, einen PC oder manuell eingegeben werden. Hierdurch kann eine Anpassung der Prozessparameter, wie beispielsweise Variation der Brennweite des Rohlaserstrahls, bei Laseranwendungen erreicht werden. Dadurch können die Prozessparameter der Laseranwendung angepasst werden. Eine Kompensation von Veränderungen des Auskoppelspiegels 8 des Lasers 9 durch Alterung, Verschmutzung, Verunreinigung oder Verschleiß kann erzielt werden. Ändert der Auskoppelspiegel 8 über die Zeit sein Verhalten, sodass eine Durchmesseränderung des Rohstrahls eintritt, kann dieser Änderung gegengesteuert werden. Aufgrund der ermittelten Daten des Sensors 6 oder Messgeräts kann der Rohstrahl entsprechend nun korrigiert werden. Der Vorteil besteht darin, einen möglichen Serviceeinsatz gezielt zu verzögern und bei Erreichen vorgegebener Grenzwerte (Strahldurchmesser) einen erforderlichen Serviceeinsatz rechtzeitig anzuzeigen und geplant durchzuführen. Um eine Zerstörung des Auskoppelspiegels 8 zu vermeiden (Überkompensation der Veränderung des Auskoppelspiegels 8), muss der Auskoppelspiegel 8 mit einer Auskoppelspiegelüberwachung ausgestattet werden, wie sie beispielsweise in der EP 1398612 A1 beschrieben ist.

Der adaptive Spiegel 2 kann über (Kühlwasser-) Druck oder auch mit Piezoelementen verstellt werden. Die fokussierende Optik 6 kann eine Linsen- oder Spiegeloptik sein.

Gemäß **Figur 2** umfasst eine Laserbearbeitungsmaschine **11** einen Laser **19,** einen Laserbearbeitungskopf **20** und eine Steuerung **17.** Veränderungen des Laserstrahls **14** werden unmittelbar vor dem Laserbearbeitungskopf 20 mithilfe eines Sensors **16** erfasst. Der adaptive Spiegel 12 zur Gestaltung des Laserstrahls 14 ist unmittelbar vor dem Auskoppelspiegel **18** angeordnet. Im Laserbearbeitungskopf 20 befindet sich eine Optik **13** zur Fokussierung des Laserstrahls 14 auf das Werkstück **15.** Zusammengefasst, besteht die Erfindung darin, möglich nahe an dem Laserbearbeitungskopf 20 Änderungen des Laserstrahls 14 zu erfassen und möglichst nahe am Auskoppelspiegel 18 Einstellungen des Laserstrahls 14 zur Kompensation von Veränderungen des Auskoppelspiegels 18 durchzuführen.

Durch eine In-Process-Messung des Laserstrahls 14 möglichst unmittelbar vor dem Laserbearbeitungskopf 20, d. h. nahe der Bearbeitungsstelle, können die Prozessparameter (beispielsweise die Rohstrahldurchmesseränderung) erfasst und über den Spiegel 12 angepasst werden bzw. die Veränderung eines Auskoppelspiegels 18 (Verschleiß, Alterung, Verunreinigung, etc.) des Lasers 19 kann kompensiert werden.

### BEZUGSZEICHENLISTE

- 1: Laserbearbeitungsmaschine
- 2: Adaptiver Spiegel
- 3: Fokussierspiegel
- 4: Laserstrahl
- 5: Werkstück
- 6: Sensor
- 7: Steuerung
- 8: Auskoppelspiegel
- 9: Laser
- 10: Laserbearbeitungskopf
- 11: Laserbearbeitungsmaschine
- 12: Adaptiver Spiegel
- 13: Fokussierspiegel
- 14: Laserstrahl
- 15: Werkstück
- 16: Sensor
- 17: Steuerung
- 18: Auskoppelspiegel
- 19: Laser
- 20: Laserbearbeitungskopf

## Patentansprüche

1. Laserbearbeitungsmaschine (1; 11) mit einer Einrichtung zur Erfassung von Veränderungen eines Laserstrahls (4; 14) innerhalb einer Laserbearbeitungsmaschine zwischen einem Auskoppelspiegel (8; 18) des Lasers (9; 19) und einem Laserbearbeitungskopf (10; 20), wobei ein Sensor (6; 16) zur Erfassung der Laserstrahlveränderungen vor dem Laserbearbeitungskopf (10; 20) angeordnet ist und eine Daten des Sensors (6; 16) erfassende und auswertende sowie einen adaptiven Spiegel (2; 12) ansteuernde Steuerung (7; 17) vorgesehen ist, wobei der adaptive Spiegel (2; 12) nahe am Auskoppelspiegel (8; 18) angeordnet ist und wobei die Steuerung (7; 17) ausgebildet ist, den adaptiven Spiegel (2; 12) zur Kompensation von am Auskoppelspiegel (8; 18) auftretenden Veränderungen anzusteuern,
**dadurch gekennzeichnet,**
**dass** zum Schutz vor einer Überkompensation von am Auskoppelspiegel (8; 18) auftretenden Veränderungen eine Überwachungseinrichtung vorgesehen ist, die den Auskoppelspiegel (8; 18) auf Zerstörung überwacht.

2. Laserbearbeitungsmaschine nach Anspruch 1, **dadurch gekennzeichnet, dass** die Steuerung (7; 17) zur Anpassung der Prozessparameter der Laserbearbeitung wie Brennweite und Strahldurchmesser ausgebildet ist.

3. Laserbearbeitungsmaschine nach Anspruch 1, **dadurch gekennzeichnet, dass** der Sensor (6) zwischen dem Auskoppelspiegel (8) und dem adaptiven Spiegel (2) angeordnet ist.

## Claims

1. Laser processing machine (1; 11) comprising a device for detecting changes of a laser beam (4; 14) within a laser processing machine between a decoupling mirror (8; 18) of the laser (9; 19) and a laser processing head (10; 20), wherein a sensor (6; 16) for detecting the laser beam changes is disposed upstream of the laser processing head (10; 20), and a control device (7; 17) is provided, which detects and evaluates data from the sensor (6; 16) and controls an adaptive mirror (2; 12), wherein the adaptive mirror (2; 12) is arranged close to the decoupling mirror (8; 18), and wherein the control device (7; 17) is designed to control the adaptive mirror (2; 12) for compensating changes that occur on the decoupling mirror (8; 18),
**characterized in that**
a monitoring device is provided as protection against overcompensation of changes that occur on the decoupling mirror (8; 18), which monitoring device monitors the decoupling mirror (8; 18) in view of destruction.

2. Laser processing machine according to claim 1, **characterized in that** the control device (7; 17) is designed for adjustment of the laser processing process parameters such as focal length and beam diameter.

3. Laser processing machine according to claim 1, **characterized in that** the sensor (6) is disposed between the decoupling mirror (8) and the adaptive mirror (2).

## Revendications

1. Machine d'usinage par laser (1 ; 11) avec un dispositif pour détecter les variations d'un faisceau laser (4 ; 14) à l'intérieur d'une machine d'usinage par laser entre un miroir de sortie (8 ; 18) du laser (9 ; 19) et une tête d'usinage par laser (10 ; 20), un capteur (6 ; 16) pour détecter les variations du faisceau laser étant disposé devant la tête d'usinage par laser (10 ; 20) et une commande (7 ; 17) qui détecte et évalue les données du capteur (6 ; 16) et commande un miroir adaptatif (2 ; 12) étant prévue, le miroir adaptatif (2 ; 12) étant disposé près du miroir de sortie (8 ; 18) et la commande (7 ; 17) étant conçue pour commander le miroir adaptatif (2 ; 12) de manière à compenser les variations qui apparaissent au miroir de sortie (8 ; 18),
**caractérisée en ce**
**que** pour la protection contre une surcompensation des variations qui apparaissent au miroir de sortie (8 ; 18), il est prévu un dispositif de surveillance qui surveille le miroir de sortie (8 ; 18) en ce qui concerne sa destruction.

2. Machine d'usinage par laser selon la revendication 1, **caractérisée en ce que** la commande (7 ; 17) est conçue pour adapter les paramètres de processus de l'usinage par laser tels que distance focale et diamètre de faisceau.

3. Machine d'usinage par laser selon la revendication 1, **caractérisée en ce que** le capteur (6) est disposé entre le miroir de sortie (8) et le miroir adaptatif (2).
